# DEMANDE DE BREVET EUROPEEN

(11) **EP 1 298 373 A1**
(43) Date de publication de la demande: **02.04.2003**
(21) Numéro de dépôt: 02292366.8
(22) Date de dépôt: 26.09.2002
(51) Int. Cl.: F16L 7/02, F16L 55/26

(54) **Dispositif de fixation d'un element tubulaire dans une cavite inaccessible**

(30) Priorité: 27.09.2001 FR 0112451
(71) Demandeur: ALCATEL, 75008 Paris (FR)
(72) Inventeur: Gauthier, Philippe, 31600 Muret (FR); Wurier, Bernard, 95760 Valmondois (FR); Herrmann, Peter Friedrich, 78510 Triel sur Seine (FR)
(74) Mandataire: Sciaux, Edmond

(57) **Abrégé**

La présente invention a pour objet un dispositif de fixation d'un élément tubulaire dans une cavité comprenant des arceaux (2A) en matériau élastiquement flexible disposés dans le plan de la section de ladite cavité et un moyen de rétention dudit élément, caractérisé en ce que, dans la direction de l'axe longitudinal de ladite cavité, lesdits arceaux sont solidarisés par un support longitudinal flexible et reliés entre eux par une membrane souple.

## Description

La présente invention se rapporte à un dispositif de fixation d'un élément tubulaire destiné à être implanté dans des cavités qui sont inaccessibles à un opérateur, notamment des cavités tubulaires comme un réseau de tuyaux, de conduits ou de canalisations notamment pour la collecte d'eaux usées ou d'eaux pluviales. Dans les cavités tubulaires, l'inaccessibilité résulte notamment des trop faibles dimensions de leur section de passage. L'invention s'étend en outre au procédé de mise en place de ce dispositif notamment dans des cavités tubulaires de faible diamètre dans lesquelles l'accès direct visuel et matériel est impossible, et en particulier dans des cavités ayant moins de 200mm de diamètre.

L'élément tubulaire peut être un câble, comme par exemple un câble à fibres optiques employé pour les télécommunications, ou bien un tuyau notamment un tube creux destiné à accueillir un ou plusieurs câbles. De manière courante l'élément tubulaire est fixé à la paroi interne d'une cavité inaccessible par des moyens de fixation individualisés disposés régulièrement le long de la cavité. Ces moyens de fixation sont fixés à l'avance sur la paroi interne de la cavité, le plus souvent à la partie supérieure, par un dispositif télécommandé. Un problème est d'assurer une fixation solide et durable de ces moyens sur la paroi de la cavité dont le matériau constitutif est de nature variable.

Le brevet DE-198 13 728 propose comme moyen de fixation des anneaux ouverts élastiques qui sont mis en place un à un dans la cavité par un dispositif télécommandé. Ces anneaux sont introduits dans la cavité sous une forme resserrée, puis relâchés une fois l'anneau positionné face à une rainure préalablement ménagée dans la paroi de la cavité. En l'absence de rainure, l'anneau doit se détendre aussi dans le sens axial pour rester en place. Ces anneaux comportent à la partie supérieure un logement destiné à accueillir l'élément tubulaire. Les éléments de fixation sont insérés à l'aide d'un robot commandé à distance.

Les procédés utilisant des moyens de fixation individualisés ont pour inconvénient de nécessiter l'utilisation d'un robot pour la pose un à un de ces moyens de fixation, ce qui constitue une opération longue, difficile et donc coûteuse. En outre ces moyens de fixation constituent des reliefs sur la paroi ; ces reliefs sont susceptibles de retenir des résidus solides circulant dans le conduit, et gênent les opérations de nettoyage ultérieures. Pour parer à ces inconvénients, une solution a été apportée par l'utilisation d'un revêtement recouvrant la totalité de la paroi interne de la cavité, l'élément tubulaire étant maintenu en place entre la paroi et le revêtement. Cette solution permet le maintien de l'élément tubulaire avec un relief moindre et quel que soit le matériau constitutif de la paroi de la cavité.

Le document GB-2 124 728 décrit l'installation d'un câble de télévision dans un conduit d'égout existant, dont la paroi interne peut éventuellement être modifiée pour accueillir le câble. De préférence le câble est suspendu au plafond de la cavité. Pour retenir le câble, ce document propose d'utiliser un matériau plastique auto-adhésif enroulé en spirale le long de la cavité, le câble étant pris en sandwich entre la paroi interne de la cavité et ce matériau de revêtement.

Le document JP-1 039 208 propose de maintenir en place un câble par un revêtement en matériau souple absorbant. Ce revêtement est introduit sous forme d'une poche dans la cavité grâce à un fluide sous pression. Une résine de durcissement est pulvérisée sur le revêtement au fur et à mesure de son introduction. Le document JP-2 131 312 décrit un revêtement poreux qui adhère à la paroi grâce à une résine époxy adhésive pulvérisée à l'intérieur. Ces procédés sont particulièrement complexes et coûteux à cause de l'importance de l'infrastructure extérieure nécessitée par la pulvérisation de résine.

Tous ces procédés utilisant un revêtement sont onéreux car la totalité de la surface de la cavité se trouve recouverte. Par ailleurs l'adhérence à la paroi de ce revêtement se dégrade dans le temps. Les conséquences en sont que le maintien du câble n'est plus assuré et que des portions de revêtement peuvent se détacher, notamment de la partie supérieure de la cavité sous l'effet de la gravité, entraînant une obstruction au moins partielle de la cavité.

La présente invention a pour but d'éliminer ces inconvénients de l'art antérieur en proposant un dispositif de fixation d'un élément tubulaire dans une cavité, inaccessible à un opérateur, dont la mise en place est rapide et simple, et de ce fait peu coûteuse. En particulier l'invention propose un dispositif dont l'installation ne nécessite pas l'utilisation d'un robot ou d'une infrastructure externe importante.

L'objet de la présente invention est un dispositif de fixation d'un élément tubulaire dans une cavité comprenant des arceaux en matériau élastiquement flexible disposés dans le plan de la section de ladite cavité et un moyen de rétention dudit élément, caractérisé en ce que, dans la direction de l'axe longitudinal de ladite cavité, lesdits arceaux sont solidarisés par un support longitudinal flexible, et reliés entre eux par une membrane souple.

Les arceaux ont la forme d'anneaux partiellement ouvert constitués d'un matériau élastiquement flexible à propriété ressort. Ils sont disposés dans le plan de la section de la cavité à intervalle régulier le long de l'axe longitudinal de la cavité. Ils ont pour fonction de maintenir l'élément tubulaire contre la paroi de la cavité, avantageusement au point le plus haut. De préférence lesdits arceaux sont constitués d'un matériau choisi parmi un métal, en particulier un acier, une matière plastique, des fibres de verre, des fibres de carbone, un élastomère et un matériau composite.

La membrane joignant les anneaux dans la direction de l'axe longitudinal de la cavité est constituée d'un matériau souple et résistant comme un élastomère, par exemple un polyuréthane ou un silicone, afin de pouvoir s'adapter aux irrégularités de la cavité, telle qu'un changement de direction. Avantageusement la membrane est soumise à une tension lors de la réalisation du dispositif afin d'éviter tout risque ultérieur de fluage de matière. La présence de la membrane solidarise les arceaux et rend inutile l'emploi d'un outillage pour la mise en place du dispositif dans la cavité.

Selon un mode de réalisation préférentiel, ladite membrane recouvre lesdits arceaux. Ainsi les arceaux sont protégés des agressions de l'environnement, en particulier contre la corrosion. Le dispositif peut par exemple être fabriqué par extrusion, par coulage, par moulage ou par assemblage de deux épaisseurs de membrane de part et d'autre des arceaux.

Le support longitudinal est utilisé pour conférer une certaine rigidité au dispositif de manière à maintenir un écartement fixe entre les arceaux pendant toute la durée de l'installation du dispositif dans la cavité. Le support doit néanmoins pouvoir se fléchir de manière à s'adapter à la configuration de la cavité, notamment les reliefs ou les changements de direction. Le support longitudinal peut être l'élément tubulaire lui-même ou une âme semi-rigide. Le support est incorporée dans la membrane au moment de la fabrication du dispositif.

Chaque arceau est pourvu d'un moyen pour retenir l'élément tubulaire. Ce moyen est par exemple constitué par une déformation d'une partie de l'arceau afin de former un logement en berceau pouvant accueillir l'élément tubulaire. Dans ce cas l'élément tubulaire peut constituer lui-même le support longitudinal en étant fixé ou soudé sur l'arceau. Le moyen de rétention peut aussi consister en une pièce de maintien rapportée sur l'arceau destinée à accueillir l'élément tubulaire.

L'élément tubulaire peut être un câble, en particulier un câble à fibres optiques employé pour les télécommunications, ou bien un tube creux destiné à accueillir un ou plusieurs câbles. Dans ce dernier cas le tube peut être lisse ou annelé. Un tube annelé présente l'avantage d'être plus souple qu'un tube lisse, et d'éviter en flexion la déformation de la paroi vers l'intérieur du tube. Le tube est constitué d'un matériau choisi parmi un métal, en particulier un acier, une matière plastique, des fibres de verre, des fibres de carbone, un élastomère et un matériau composite.

La présente invention a comme avantage que ce dispositif peut être utilisé dans tout type de cavité, en particulier inaccessible à un opérateur, même de diamètre très réduit sous réserve de ne pas l'obstruer, car il n'est pas nécessaire d'introduire un appareil dans la cavité pour effectuer la mise en place du dispositif. De ce fait l'installation du dispositif selon l'invention est plus facile et d'un coût réduit.

Ce dispositif peut être utilisé dans tout type de cavité quel que soit son diamètre et le matériau constitutif de la paroi (ciment, PVC, fonte, etc...), y compris dans le cas où différents diamètres ou bien plusieurs matériaux se rencontrent successivement le long d'une même canalisation. En outre il n'est pas nécessaire de le positionner sur toute la longueur d'une cavité tubulaire mais il suffit d'en équiper les parties linéaires. Une fois le dispositif installé, on dispose avantageusement d'une surface parfaitement propre et lisse sur la partie angulaire de la paroi correspondant à la longueur de l'arceau déployé.

L'invention a aussi pour objet un procédé de fixation d'un élément tubulaire à l'aide du dispositif décrit précédemment, comprenant les étapes suivantes:
- on relève la topographie de la paroi interne de ladite cavité à l'aide d'un appareil télécommandé,
- on adapte ledit dispositif à la topographie de ladite cavité,
- on introduit ledit dispositif dans ladite cavité, lesdits arceaux étant sous forme resserrée,
- on libère lesdits arceaux qui s'appliquent contre ladite paroi en prenant une forme déployée.

Préalablement à l'insertion du dispositif, la cavité doit être nettoyée. L'appareil de nettoyage est par exemple un appareil commandé à distance comportant un moyen de déplacement linéaire par propulsion et un moyen permettant son orientation dans l'espace. Les moyens de propulsion et d'orientation utilisent des jets de fluide sous pression et sont commandés hydrauliquement ou pneumatiquement. L'appareil télécommandé employé pour le nettoyage peut avantageusement servir à enregistrer la topographie de la cavité par exemple en étant équipé d'un dispositif de prise de vue tel qu'une caméra, la cavité étant éclairée à l'aide de fibres optiques.

Une fois le relevé topographique établi, le dispositif est assemblé de manière à correspondre aux obstacles rencontrés (montée, descente, virage, réduction de diamètre, autre objet, etc...). Notamment il n'est pas nécessaire de positionner le dispositif sur toute la longueur d'une cavité tubulaire mais il suffit d'en équiper les parties linéaires. Dans les parties non linéaires, l'élément tubulaire reste en position en étant maintenu à ses deux extrémités.

Les arceaux sont des anneaux ouverts constitués d'un matériau élastique agissant comme un ressort qui autorise leur introduction dans la cavité sous une forme resserrée. Les arceaux sont maintenus sous contrainte en position resserrée de telle sorte que le diamètre du dispositif soit inférieur à celui de la cavité pour une introduction aisée. Les extrémités situées de part et d'autre de l'interruption de la circonférence peuvent même se chevaucher ou s'enrouler sur elles-mêmes.

Afin de maintenir les arceaux en configuration resserrée, le dispositif peut par exemple être enserré dans une gaine amovible. Il peut ainsi être aisément introduit dans la cavité. Une fois le dispositif mis en place, la gaine est retirée et les arceaux prennent une configuration déployée. La gaine peut être du type chaussette, elle est alors retirée par retournement. Il peut aussi s'agir d'une gaine déchirable, par exemple à l'aide d'un fil qui est tiré de l'extérieur. La force de déchirement est calculée de manière à ce que la déchirure une fois amorcée se propage sur toute la longueur de la gaine sous la poussée des ressorts, libérant ainsi successivement les arceaux au fur et à mesure de la progression de la déchirure le long du dispositif installé. Bien entendu la gaine doit être constituée d'un matériau non-élastique tel qu'un film plastique ou un tissu. Les arceaux peuvent être maintenus en position resserrée par un point de fixation qui est détruit après insertion du dispositif dans la cavité, par exemple en tirant sur un fil.

Une fois libérés de cette contrainte, les arceaux se comportent comme des ressorts et prennent une configuration déployée, recouvrant une zone angulaire qui est de préférence supérieure à 180°. En position relâchée, les arceaux ont un diamètre supérieur à celui de la cavité. Les arceaux sont définis de manière à ne pas pouvoir se déployer complètement, de telle sorte que dans cette position ils exercent une forte pression sur la paroi de la cavité, ce qui les maintient fermement en place. Les arceaux assurent, grâce à la combinaison de leurs propriétés de rigidité et d'élasticité, le maintien de l'ensemble du dispositif à la partie supérieure de la cavité.

Afin d'aider au déploiement des arceaux, une enveloppe gonflable peut être disposée au coeur du dispositif. De préférence cette enveloppe est de forme sensiblement cylindrique. Elle peut être gonflée simultanément au déchirement de la gaine pour exercer une pression sur les arceaux et faciliter leur positionnement dans la partie supérieure de la cavité. La pression qu'exerce l'enveloppe en se gonflant peut aussi être utilisée pour provoquer la déchirure de la gaine.

Pour positionner le dispositif en haut de la cavité pendant le déploiement des arceaux, un câble de maintien peut être installé à l'intérieur du support longitudinal et maintenu en position haute aux deux extrémités de la cavité. Une fois le dispositif en place, le câble de maintien est retiré. On peut aussi disposer à l'intérieur du dispositif une enveloppe préalablement gonflée et convenablement lestée. En remplissant la cavité d'eau par exemple, le dispositif se place ainsi de lui-même en position haute. Une fois le dispositif en place, l'eau et l'enveloppe gonflable sont évacuées de la cavité.

D'autres caractéristiques et avantages de la présente invention apparaîtront au cours des exemples suivants de réalisation, donnés bien entendu à titre illustratif et non limitatif, et dans le dessin annexé sur lequel
- la figure 1 représente en perspective un mode de réalisation du dispositif selon l'invention avant introduction dans la cavité, les arceaux étant en configuration resserrée,
- la figure 2 montre le dispositif de la figue 1 une fois introduit dans la cavité, les arceaux étant en configuration déployée,
- la figure 3 montre une variante de la configuration resserrée des arceaux du dispositif selon l'invention,
- la figure 4 est analogue à la figure 3 pour une autre variante de la configuration resserrée du dispositif selon l'invention,
- la figure 5 est un autre mode de réalisation des arceaux du dispositif selon l'invention,
- la figure 6 représente en perspective un dispositif comportant les arceaux de la figure 5, après introduction dans la cavité,
- la figure 7 est analogue à la figure 5 pour encore un autre mode de réalisation des arceaux,
- la figure 8 représente en perspective l'implantation du dispositif selon l'invention dans un réseau de cavités tubulaires.

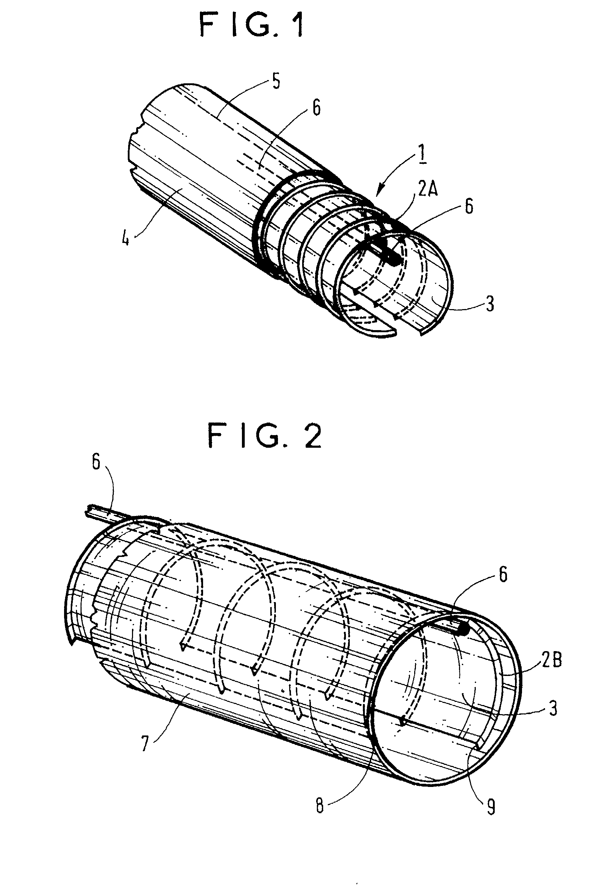

La figure 1 représente un dispositif 1 conforme à la présente invention comprenant des arceaux 2A en configuration resserrée, reliés par une membrane 3. Les arceaux 2A sont des languettes métalliques en acier à effet ressort dont l'épaisseur est moindre que la largeur. Par exemple leur épaisseur est comprise entre 1 et 5mm et leur largeur est comprise entre 2 et 50mm. Les arceaux 2A sont maintenus dans cette position par une gaine 4 par exemple en matière plastique, représentée partiellement. La gaine 4 comporte un affaiblissement linéaire 5 selon lequel la déchirure sera effectuée à partir d'un point de rupture prévu. Dans le cas présent, l'élément tubulaire 6 est fixé sur les arceaux et remplit la fonction de support longitudinal pour le dispositif 1. L'élément tubulaire 6 est ici un tube creux annelé en acier destiné à contenir des câbles, notamment des câbles à fibres optiques.

Le dispositif 1 est introduit dans une canalisation 7 comme montré sur la figure 2. Après rupture et évacuation de la gaine 4, les arceaux 2B adoptent une configuration déployée. Les arceaux 2B s'appuient alors sur la paroi de la canalisation 7. L'arc de cercle compris entre les extrémités 8 et 9 des arceaux 2B correspond à un angle α supérieur à 180° afin d'assurer un appui solide et fixe. La partie supérieure de la canalisation 7 revêtue du dispositif 1 présente grâce à la présence de la membrane 3 une surface lisse et propre qui contribue à faciliter l'utilisation et l'entretien de la canalisation 7.

Selon la taille et la forme de la canalisation et la longueur des arceaux, la configuration resserrée peut prendre plusieurs formes.

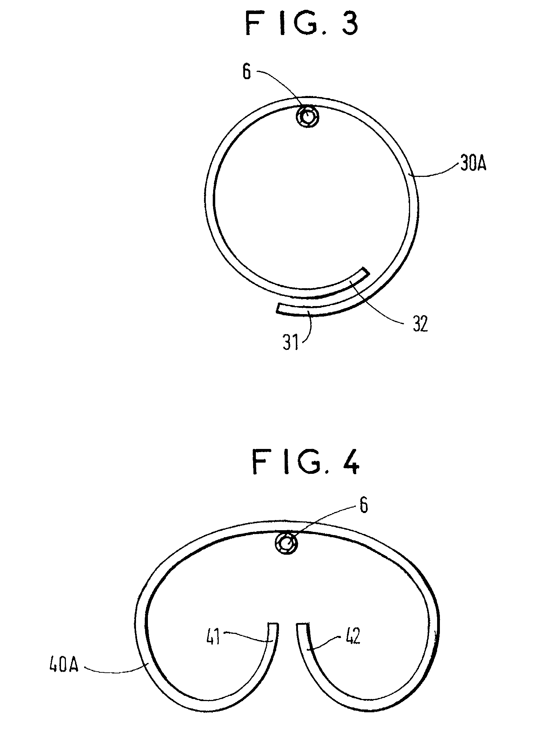

Sur la figure 3, on a représenté un arceau 30A partiellement enroulé sur lui-même, les extrémités 31 et 32 se chevauchant. Comme sur les figures précédentes, l'élément tubulaire 6 est fixé sur l'arceau 30A.

Sur la figure 4, l'arceau 40A présentent des extrémités 41 et 42 chacune enroulée sur elle-même. Comme sur les figures précédentes, l'élément tubulaire 6 est fixé sur l'arceau 40A.

Dans le cas où on incorpore une âme semi-rigide dans le dispositif au moment de sa fabrication, il faut prévoir des moyens pour retenir et maintenir en place l'élément tubulaire à installer.

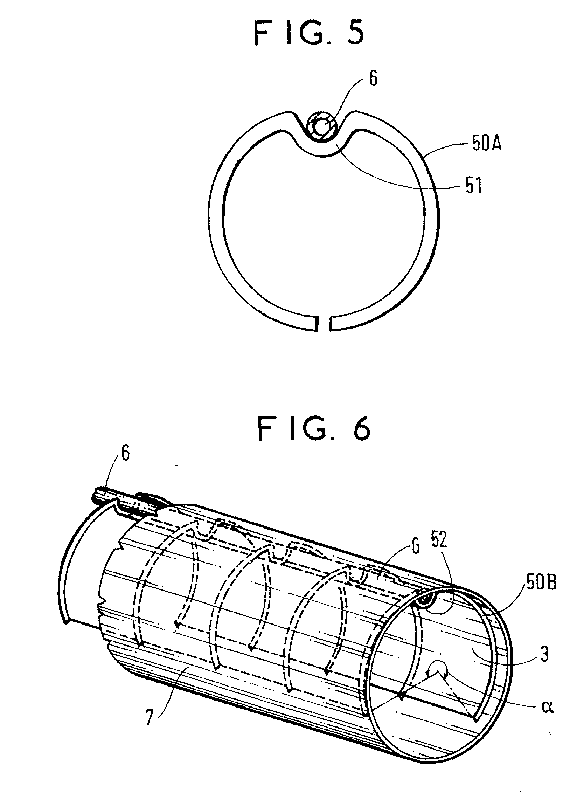

Sur l'arceau 50A de la figure 5, ce moyen peut être un logement 51 en berceau formé par l'arceau lui-même qui a subit une déformation. Une âme 52 noyée dans la membrane 3 garantie le positionnement des arceaux 50B comme visible sur la figure 6. L'élément tubulaire 6 peut être introduit par la suite dans le logement 51 où il repose.

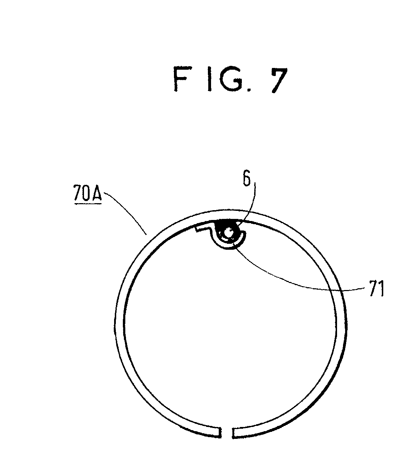

Il est aussi possible que le moyen de rétention soit rapporté et fixé sur l'arceau par soudure ou collage selon les matériaux employés. Un arceau 70A, sur lequel a été fixé un crochet 71, est représenté sur la figure 7. L'élément tubulaire 6 est introduit après mise en place dans la cavité du dispositif selon l'invention, et retenu par le crochet 71.

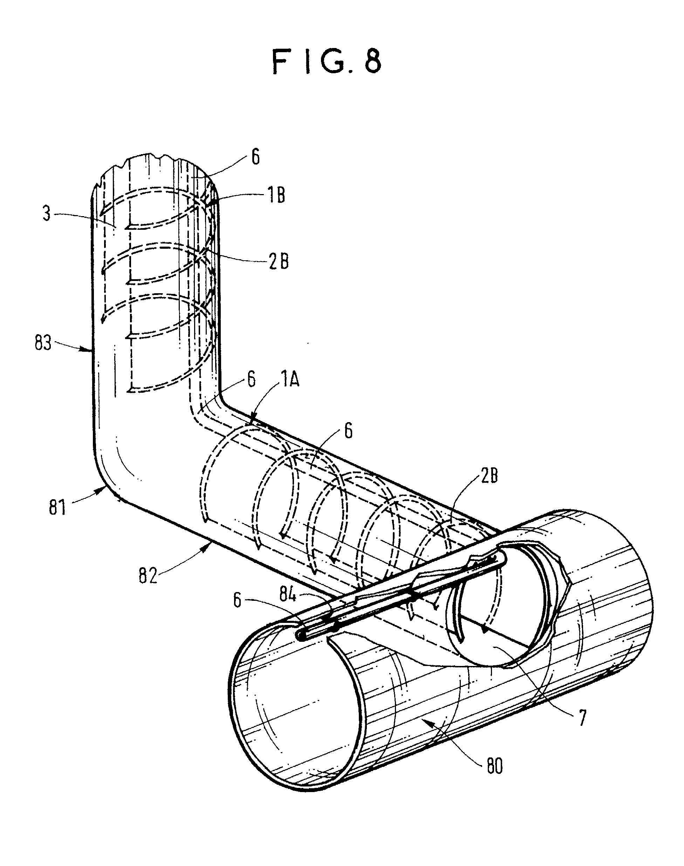

La figure 8 montre l'utilisation du dispositif selon l'invention dans une portion d'un réseau de cavités tubulaires comprenant un conduit 80 d'un diamètre le rendant accessible et une canalisation latérale 7 de plus faible diamètre présentant un coude 81. Sur cet exemple de réalisation, le dispositif 1 selon l'invention est composé de deux tronçons 1A et 1B occupant respectivement les portions linéaires 82 et 83 de la canalisation 7. Le nombre des arceaux 2B reliés par une membrane souple 3 constituant chaque tronçon 1A et 1B destinés à équiper les portions 82 et 83 de la canalisation 7, a été calculé à partir du relevé topographique établi préalablement. Entre les portions 82 et 83, dans la partie formant un coude 81, l'élément tubulaire 6 est maintenu à chacune de ses extrémités fixées respectivement sur les tronçons 1A et 1B du dispositif. Dans le conduit 80, l'élément tubulaire 6 est maintenu au plafond de la cavité de manière courante par des crochets 84.

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention donner au moyen de rétention toute forme connue apte à maintenir l'élément tubulaire dans la position qui lui a été assignée. Le dispositif selon l'invention a été décrit pour la fixation d'un seul élément tubulaire mais il est bien entendu que ce dispositif peut être également employé pour fixer plusieurs éléments tubulaires, éventuellement de différents diamètres, dont les fonctions peuvent être similaires ou différentes. Ces éléments tubulaires peuvent être disposés bien côte à côte mais aussi superposés dans la mesure où les autres fonctions de la cavité n'en sont pas perturbées.

## Revendications

1. Dispositif de fixation d'au moins un élément tubulaire dans une cavité comprenant des arceaux en matériau élastiquement flexible disposés dans le plan de la section de ladite cavité et un moyen de rétention dudit élément, **caractérisé en ce que**, dans la direction de l'axe longitudinal de ladite cavité, lesdits arceaux sont solidarisés par un support longitudinal flexible et reliés entre eux par une membrane souple.

2. Dispositif selon la revendication 1, dans lequel lesdits arceaux sont constitués d'un matériau choisi parmi un métal, une matière plastique, des fibres de verre, des fibres de carbone, un élastomère et un matériau composite.

3. Dispositif selon l'une des revendications 1 et 2, dans lequel ladite membrane recouvre lesdits arceaux.

4. Dispositif selon l'une des revendications précédentes, dans lequel ladite membrane est en élastomère.

5. Dispositif selon l'une des revendications précédentes, dans lequel ledit support est constitué par ledit élément tubulaire.

6. Dispositif selon l'une des revendications précédentes, dans lequel ledit élément tubulaire est choisi parmi un câble et un tube creux.

7. Dispositif selon l'une des revendications précédentes, dans lequel ledit tube est annelé.

8. Dispositif selon l'une des revendications 6 et 7, dans lequel ledit tube est constitué d'un matériau choisi parmi un métal, une matière plastique, des fibres de verre, des fibres de carbone, un élastomère et un matériau composite

9. Procédé de fixation d'un élément tubulaire à l'aide du dispositif selon l'une des revendications précédentes, comprenant les étapes suivantes :
- on relève la topographie de la paroi interne de ladite cavité à l'aide d'un appareil télécommandé,
- on adapte ledit dispositif à la topographie de ladite cavité,
- on introduit dans ladite cavité ledit dispositif, lesdits arceaux étant sous forme resserrée,
- on libère les arceaux qui s'appliquent contre ladite paroi en prenant une forme déployée.

10. Procédé selon la revendication 9, dans lequel lesdits arceaux sont maintenus en position resserrée par une gaine amovible.

11. Procédé selon la revendication 9, dans lequel lesdits arceaux sont maintenus en position resserrée par un point de fixation.

12. Procédé selon l'une des revendications 9 à 11, dans lequel lesdits arceaux en configuration déployée recouvrent une zone angulaire supérieure à 180°.

13. Procédé selon l'une des revendications 9 à 12, dans lequel une enveloppe gonflable est disposée au coeur du dispositif.
